# EUROPEAN PATENT APPLICATION

(11) **EP 2 966 759 A1**
(43) Date of publication of application: **13.01.2016**
(21) Application number: 14760636.2
(22) Date of filing: 30.01.2014
(51) Int. Cl.: H02K 5/24

(54) **ROTATING ELECTRICAL MACHINE**

(30) Priority: 08.03.2013 JP 2013046063
(71) Applicant: Nissan Motor Co., Ltd, Yokohama-shi, Kanagawa 221-0023 (JP)
(72) Inventor: MAIHARA, Souichi, Atsugi-shi Kanagawa 243-0123 (JP); YABE, Tadashi, Atsugi-shi Kanagawa 243-0123 (JP); OZAKI, Noriyuki, Atsugi-shi Kanagawa 243-0123 (JP)
(74) Representative: Hoefer & Partner Patentanwälte mbB
(86) International application number: PCT/JP2014/052018
(87) International publication number: WO 2014/136504

(57) **Abstract**

The purpose of the present invention is to provide a rotating electrical machine such as an electrical motor in which generation of noise can be suppressed. According to the present invention, the motor (a rotating electrical machine) (1) is provided with; an annular stator (2); a motor case (4) in which the stator (2) is accommodated; and an annular inner frame (3) with which one axial end of the stator (2) is supported on the motor casing (4). The inner frame (3) is provided with: a bolt fastening portion (30), i.e. a portion which couples the stator (2) at a radially outer side; and a bolt fastening portion (32), i.e. a portion which couples the motor case (4) at a radially inner side. At a portion between the first coupling portion and the second coupling portion (connecting portion (33)), the radial rigidity is lower than the circumferential rigidity.

## Description

The present invention relates to a rotating electrical machine.

### BACKGROUND

Conventionally, a rotating electrical machine or a rotary electric machine is known in which a stator is accommodated or housed in a motor case (housing). For example, in the rotating electrical machine described in Patent Document 1, an annular stator and a motor case of bottomed cylindrical shape are provided, and, by fastening one axial end of the stator to a bottom wall portion through a plurality of bolts, the stator is supported on the motor case in a cantilevered manner.

### PRIOR ART LITERATURE

### PATENT DOCUMENT

Patent Document 1: JP 2000-14103 A

### SUMMARY OF THE INVENTION

### PROBLEM TO BE SOLVED BY THE INVENTION

However, in the conventional rotating electrical machine, because the radial rigidity of the wall portion which supports the stator is high, the electromagnetic exciting force of the stator (excitation force) is transmitted to the motor case via the wall portion, a problem arises that noise is likely to be emitted to the motor case outside. The present invention has been made in view of this problem and is intended to provide a rotating electrical machine that may suppress noise.

### MECHANISM FOR SOLVING THE PROBLEM

For this purpose, the rotating electrical machine according to the present invention has, as a support member for supporting a stator on the motor case, an annular support member with a coupling portion to the stator on the radially outer side and another coupling portion to the motor case on the radially inner side, wherein the rigidity in the radial direction of the support member is configured to be low at a portion connecting these coupling portions.

### EFFECT OF THE INVENTION

The support member attenuates the radial electromagnetic excitation force of the stator and transmits the same to the motor case. Here, the radial stiffness in the connection portion of the support member is set lowered than that of the motor case. Therefore, it is possible to more effectively suppress the noise.

### BRIEF DESCRIPTION OF THE DRAWINGS

Figure 1 shows a motor 1 of a first embodiment in a cross-section taken along a plane passing through the axis O thereof;
Figure 2 is a perspective view of an assembly of the stator 2 and the inner frame 3 of the first embodiment seen from the x-axis negative direction;
Figure 3 is a perspective view of the assembly of the stator 2 and the inner frame 3 of the first embodiment seen from the x-axis positive direction;
Figure 4 is a schematic sectional view of the motor 1 of the first embodiment taken along a plane passing through the axis O;
Figure 5 is a perspective view of an assembly of the stator 2 and the inner frame 3 of a second embodiment seen from the x-axis negative direction;
Figure 6 is a perspective view of the assembly of the stator 2 and the inner frame 3 of the second embodiment seen from the x-axis positive direction;
Figure 7 is a sectional view of the assembly of the stator 2 and the inner frame 3 of the second embodiment taken along a plane passing through the axis O;
Figure 8 is a partial sectional view of the assembly of the stator 2 and the inner frame 3 of the second embodiment taken along a plane passing through the axis O and shows a perspective view thereof seen from the x-axis positive direction;
Figure 9 is a partial sectional view of the assembly of the stator 2 and the inner frame 3 of the second embodiment taken along a plane passing through the axis O and shows a perspective view thereof seen from the x-axis negative direction;
Figure 10 is a perspective view of an assembly of the stator 2 and the inner frame 3 of a third embodiment seen from the x-axis negative direction;
Figure 11 is a perspective view of the assembly of the stator 2 and the inner frame 3 of the third embodiment seen from the x-axis positive direction;
Figure 12 is a perspective view of an assembly of the stator 2 and the inner frame 3 of a fourth embodiment seen from the x-axis negative direction;
Figure 13 is a perspective view of the assembly of the stator 2 and the inner frame 3 of the fourth embodiment seen from the x-axis positive direction;
Figure 14 is a partial sectional view of the assembly of the stator 2 and the inner frame 3 of the fourth embodiment taken along a plane passing through the axis O and shows a perspective view thereof seen from the x-axis positive direction; and
Figure 15 is a partial sectional view of the assembly of the stator 2 and the inner frame 3 of the fourth embodiment taken along a plane parallel with the axis O and shows a perspective view thereof seen from the x-axis positive direction.

### EMOBODIMENTS FOR IMPLEMENTING THE INVENTION

Below, description is given in detail of embodiments according to the present invention with reference to the illustrated embodiment.

### [FIRST EMBODIMENT]

### [CONFIGURATION]

First, a description is given of the configuration. A rotating electrical machine of the present embodiment (hereinafter referred to as a motor 1) is used for an in-wheel motor (wheel driving unit) for an electric vehicle, and is installed at each wheel to enable vehicle propulsion by driving the wheels individually. The motor 1 is housed inside a wheel support member (not shown) for rotatably supporting the wheel. The motor 1 is a three-phase AC motor, and functions as an electric motor (motor) during discharge of the power source (battery) and generates power by applying a three-phase alternating current supplied from an inverter to a stator coil. During battery charging, the motor functions as a generator and supplies three-phase alternating current from the stator coil to the inverter. In addition, the motor 1 may be used for a drive unit for a hybrid vehicle and the like. The use is thus not particularly limited. Further, the motor 1 is not limited to the three-phase AC motor.

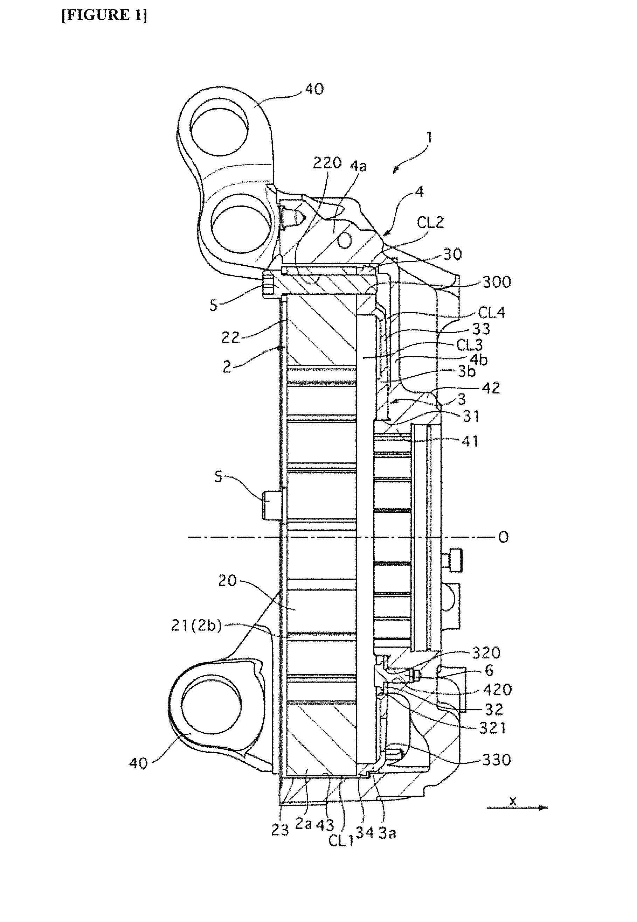

The motor 1 includes an annular stator 2, a rotor (not shown) housed in the inner peripheral side of the stator 2, a motor case 4 that accommodates the stator 2, and an inner frame 3 that fixedly supports, as an annular support member, one axial end of the stator 2 with respect to the motor case 4. Figure 1 shows cross-sections of the motor 1 taken along planes passing through the axis O. For convenience of explanation, the cross sections are shown respectively passing through the axis of the bolts 5 and 6. An X axis is provided in a direction in which the axis O extends and the positive direction thereof is defined as a side on which the inner frame 3 is disposed with respect to the stator 2 (or a side on which a bottom portion 4b of the motor case 4 is provided).

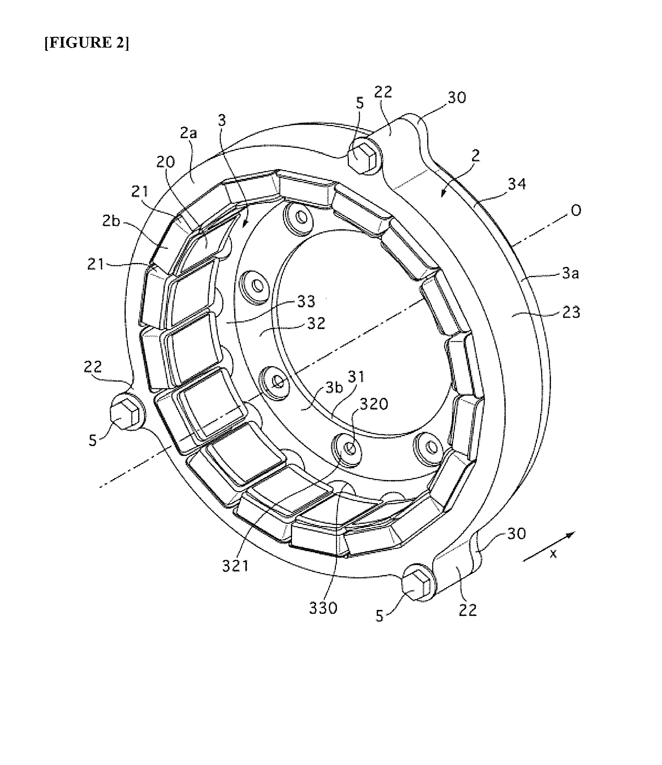

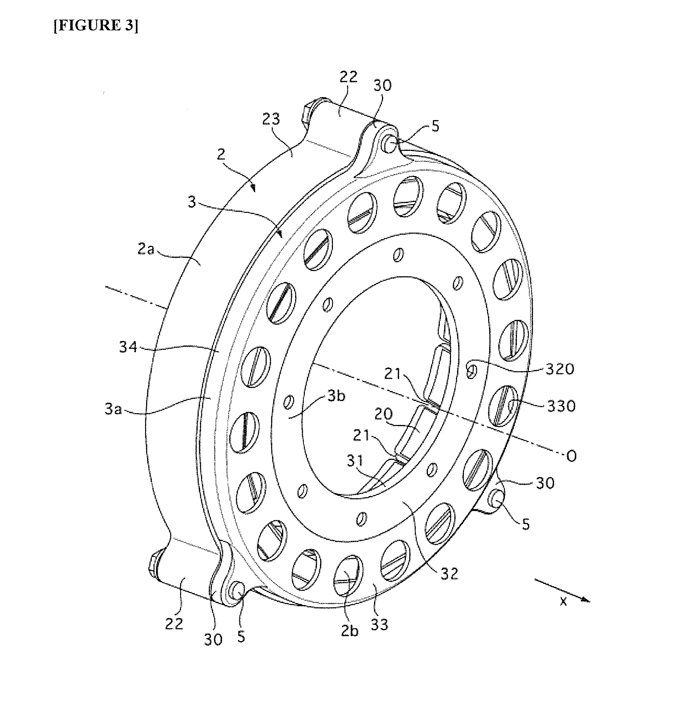

Figure 2 is a perspective view of the combined assembly of the stator 2 and the inner frame 3 as seen from the x-axis negative direction, while Figure 3 is a perspective view of the assembly as seen from the x-axis positive direction.

The stator 2 includes a stator core 2a and a coil 2b wound around the stator core 2a. The stator core 2a is of annular circular shape (hollow cylindrical shape) and has a plurality of teeth 20 (eighteen teeth in the embodiment) arranged on the inner peripheral surface thereof annularly in the circumferential direction. Each tooth 20 is arranged to extend in a radial direction, and a slot 21 is formed between the adjacent teeth 20, 20. A winding of the coil 2b is wound around the teeth 20 to be fitted into the slot 21. The stator core 2a, for example, is constituted by placing a plurality of core pieces (the split stator cores) in an annular shape. The core piece, for example, is constituted by laminating electromagnetic steel sheets of the magnetic material in the axial direction. The stator core 2a has a plurality of bolt fastening portions 22 (three in this embodiment) on the outer peripheral surface. The bolt fastening portion 22 is a stator flange portion provided to protrude from the outer circumferential surface of the stator 2 radially outward and formed at substantially equal intervals in the circumferential direction (shifted by 120 degrees from each other). The bolt fastening portion 22 is formed with hole 220 in the axial direction for inserting a fastening bolt 5.

The rotor is disposed on the inner periphery of the stator 2 substantially coaxially with the stator 2. The rotor is disposed with a radial gap (clearance in the radial direction) with respect to the stator 2, and magnetic paths are formed through this gap. The rotor, for example, has a rotor core constructed by laminating a plurality of electromagnetic steel plates and a plurality of permanent magnets which are located (embedded) into the rotor core. An output shaft of the motor 1 (now shown) is fixedly mounted on the rotor outside the figure of the motor 1. The output shaft is rotatably supported with respect to a wheel support member by bearings which are arranged axially on opposite sides of the rotor. One end of the output shaft (x-axis positive direction side near the wheel) is supported rotatably by a bearing provided in the radially inner side of the motor case 4 and coupled to the wheel (wheel hub). When energizing the stator 2, the rotor is rotated by electromagnetic force which is generated by the stator 2. The rotational driving force output from the motor 1 is transmitted to the wheels through the output shaft as a rotating force. By allowing the wheel to rotate with the output shaft, it is possible to integrally rotate the output shaft and the wheel to thereby allow the running of the electric vehicle. During regenerative braking of the vehicle, the wheel is rotated by the inertia force of the vehicle body. The motor 1 is driven through the output shaft by the rotation force from the wheel. In this case the motor 1 operates as a generator, and the generated power is stored in battery via an inverter.

The motor case 4 represents an outer frame of the motor 1 (outer frame). The motor case 4 has a function of protecting the stator 2 and the like from the outside of the motor and is fixedly mounted with respect to the wheel support member. As shown in Figure 1, the motor case 4 is of bottomed cylindrical shape, and has a cylindrical portion extending in an axial direction and a bottom portion 4b expanding radially. A bracket 40 is provided for fixing the motor case 4 to the wheel support member. A substantially cylindrical bearing portion 41 is provided for rotatably supporting the output shaft on the radially inward side of the bottom portion 4b. The bottom portion 4b is provided with a bolt fastening portion 42 of substantially annular shape surrounding the bearing portion 41 (bearing). The bolt fastening portion 42 is provided integrally with the bearing portion 41 at the outer peripheral side of the bearing portion 41 (bearing).The bolt fastening portion 42 is provided with a plurality of holes (internal thread portion) 420 in a bag shape for fastening bolts 6 (eight bolts in the present embodiment) arranged substantially equidistantly in a circumferential direction. The bolt fastening portion 42 is formed to be thicker and of relatively higher rigidity in the x-axis direction compared to other portions of the bottom portion 4b so as to secure a sufficient strength around the hole 420. In the inner peripheral (radially inner) side of the motor case 4 (i.e. cylindrical portion 4a), the stator 2 is arranged substantially coaxially with the motor case 4 (cylindrical portion 4a). The stator 2 is disposed in the motor case 4 (cylindrical portion 4a) with a radial gap (radial clearance) CL1.

The inner frame 3 is disposed in an inner side of the motor 1 and intended to be a support member for supporting the stator 2 with respect to the motor case 4. The inner frame 3 is formed, for example, of an aluminum-based or iron-based metal material. The inner frame 3 is donut-type disc-shaped, and has a cylindrical portion 3a extending in the axial direction with a donut shaped circular plate portion 3b extending radially inwardly from the inner periphery at one axial end of the cylindrical portion 3a (on the x-axis positive direction side). The cylindrical portion 3a has a plurality of bolt fastening portions 30 (three in this embodiment) on the outer peripheral surface. The bolt fastening portions 30 are inner frame side flange portions formed to protrude radially outward from the outer peripheral surface of the cylindrical portion 3a with substantially equal intervals to each other in the circumferential direction (shifted by 120 °). Each bolt fastening portion 30 is formed with a hole 300 (internal thread portion) into which a fastening bolt 5 is inserted in the axial direction.

When viewed from the x-axis direction, in a state in which the inner frame 3 (cylindrical portion 3a) and the stator (stator core 2a) are positioned relative to each other such that the hole 300 of the bolt fastening portion 30 of the cylindrical portion 3a is substantially aligned with the hole 220 of the bolt fastening portion 22 of the stator 2, the fastening bolts 5 is inserted from the x-axis negative direction side in both holes 300 and 320 to be fastened. Thus, the inner frame 3 (cylindrical portion 3a) is fixed to the stator 2 (stator core 2a). That is, the bolt fastening portion 30 represents a coupling portion between the inner frame 3 and the stator 2 (first coupling portion) and is provided radially outer side of the inner frame 3. Note that the outer peripheral surface 34 radially outward of the cylindrical portion 3a is configured to be accommodated within the radially outer peripheral surface 23 of the stator core 2a. The inner frame 3 (cylindrical portion 3a) is placed with a radial gap (radial clearance) CL2 with respect to the motor case 4 (cylindrical portion 4a) in a state coupled to the stator 2.

A through hole 31 is provided in substantially the center of the plate portion 3b. Further, fastening portions 32 are provided in the substantially annular shape surrounding the through hole 31. A bearing portion 41 of the motor case 4 is installed to be fitted into the through hole 31. The bolt fastening portions 32 are formed with a plurality of through holes 320 (eight in the present embodiment) in the axial direction and arranged in a circumferential direction at substantially equal intervals. The fastening bolts 6 is inserted into each hole 320. As shown in Figure 2, in terms of x-axis negative direction side of the plate portion 3b, on the periphery of each hole 320, the recess 321 provided in the thin-walled provided than other parts of the bolt 32. As shown in Figure 2, on the surface of the x-axis negative direction of the plate portion 3b, at the periphery of each hole 32, a recess 321 is formed with a wall thickness thinner than other portions of the bolt fastening portions 32. As shown in Figure 1, a head of the fastening bolt 6 is accommodated in the recess 321. When viewed from the x-axis, in a state the inner frame 3 (plate portion 3b) is positioned relative to the motor case 4 such that the hole 320 of the bolt fastening portion 32 of the plate portion 3b is substantially aligned with the hole 420 of the bolt fastening portion 42 of the motor case 4, the fastening bolt 6 is inserted from the negative x-axis direction side in both holes 320 and 420 for fastening. Thus, at a radially inward position than the stator core 2a, the inner frame 3 is secured by bolts 6 to the motor case 4. That is, the bolt fastening portions 32 represent a coupling portion (second coupling portion) between the inner frame 3 and the motor case 4, and are provided radially inward of the inner frame 3. While the inner frame 3 is coupled to the stator 2, the bolt fastening portions 32 are located radially inward of the stator core 2a.

The inner frame 3 is configured to be coupled to the stator 2 at the cylindrical section 3a (first coupling portion) while being coupled to the motor case 4 at the inner periphery side of the plate portion 3b (second coupling portion). That is, the inner frame 3 supports the stator 2 relative to the motor case 4 in a position radially inner side of the stator 2. The stator 2 is coupled to the motor case 4 through the inner frame 3 such that the axial thereof substantially coincides with the axis O of the motor case 4. Thus, one axial end of the stator 2 (end of the x-axis positive direction) is supported in a cantilevered manner with respect to the motor case 4.

The plate portion 3b of the inner frame 3 is provided with a connecting portion 33 radially outward of the bolt fastening portions 32 and radially inward than the cylindrical portion 3a (bolt fastening portion 30). The connecting portion 33 is a portion for connecting the cylindrical portion 3a and the bolt portions 32 and formed in a substantially circular ring shape surrounding the bolt fastening portions 32 and has a thin-walled portion with a small x-axis dimension than the bolt fastening portions 32. The plate portion 3b is provided in the positive x-axis direction end of the cylindrical portion 3a, and, in a state in which the inner frame 3 (cylindrical portion 3a) is coupled with the stator 2, the connecting portion 33 is disposed with respect to the stator coil 2b with an axial gap (x-axis gap or clearance corresponding to the x-axis direction dimension of the cylindrical portion 3a). Further, in a state in which the inner frame 3 (bolt connecting portion 32) is coupled to the motor case 4, the connecting portion 33 is disposed with an axial gap (axial direction clearance) CL4 with respect to the motor case 4 (bottom portion 4b). As lightening portions, a plurality of through holes 330 (eighteen in the present embodiment) are formed axially in the connecting portion 33 at substantially equal intervals in the circumferential direction. In a state with the inner frame 3 being coupled to the stator 2 and accommodated within the motor case 4, the hole 330 is disposed overlapped in the radial direction with respect to the stator core 2a (teeth 20 or stator coil 2b). In other words, the hole 330 is opposed to the stator coil 2b in the axial direction, and, when viewed from the x-axis direction, the hole 330 is at least partly concealed from view by the stator coil 2b. It should be noted that the lightening or hollow portion may be formed in a bag-shaped hole (recess) and the like instead of the through hole 330.

The rigidity of the inner frame 3 is configured to be lower than the rigidity of the motor case 4. More specifically, the radial rigidity or stiffness of the plate portion 3b (connecting portion 33) of the inner frame 3 is configured to be lower than the radial rigidity of the bottom portion 4b of the motor case 4. Further, by providing a plurality of lightening portions (holes 330) arranged in a circumferential direction, compared to a case in which these lightening parts (holes 330) are not provided, the radial rigidity of the inner frame 3 at the connecting portion 33 (between bolt fastening portions 30 and 32) is set lower. In addition, by providing the lightening portions (holes 330), the radial rigidity at the connecting portion 33 (between the bolt connecting portions 30, 32)is reduced than the rigidity of the same plate section 3b in the circumferential direction of the plate portion 3b (connecting portion 33).

### [Operation]

Now, a description is given of the operational effects. The motor 1 vibrates at the time of generation of a driving force as an electric motor and at the time of generation of electrical power as a generator. The stator core 2a is an oscillation source of the vibration of the motor 1, and, when the electromagnetic exciting force of the stator core 2a is transmitted to the motor case 4, noise is emitted to the outside of the motor case 4. For example, the stator core 2a vibrates radially with relatively large amplitude in the outer periphery. Vibration and noise are generated due to such a radial magnetic excitation force of the stator 2. At the time of the relative rotation between the rotor and the stator 2, each time the magnetic pole of the rotor crosses the opening portion of the slot 21 provided in the stator 2, the magnetic path of the field flux generated from the magnetic pole of the rotor changes periodically so as to cause change in the magnetic flux distribution in the gap, and the electromagnetic exciting force of the stator 2 is generated. The rotation order, special order, and the amplitude of the radial electromagnetic excitation force are dependent on the number of magnetic poles of the motor 1 (the number of poles of the effective magnetic pole opening angle and the number of slots 21 provided in the stator 2) and the like. As the vibration mode due to radial electromagnetic excitation force, a circular O-order mode and the like may be mentioned, in which the stators 2 vibrate in phase in the radial direction of the motor 1. When the electromagnetic exciting force, which depends on the number of magnetic poles of the motor 1, excites a resonant mode attributable to the structure of the motor case 4, noise of the high tone becomes harsh.

If the outer periphery of the stator 2 is fixed onto the inner periphery of the motor case 4, the vibration of the stator 2 is transmitted to the motor case 4 in a relatively short vibration transmission path. In addition, if the stator 2 is supported by the inner periphery surface 43 of the motor case 4, the stator 2 and the motor case 4 come into surface contact to thereby cause the radial vibration of the stator 2 to the motor case 4 directly via the contact surface so that the noise to the outside of the motor case 4 is increased. For example, in the structure in which the stator 2 is shrink-fitted on the inner periphery of the motor case 4, the vibration due to the electromagnetic exciting force of the stator 2 of the circular 0-order mode will be transmitted directly to the motor case 4. Therefore, the motor noise nth order will be deteriorated. Here, the "motor noise nth order" represents that the motor rotates n turns to cause the vibration once. Thus, in a structure for fixing or supporting as described above, it is impossible to reduce the vibration transmitted from the stator 2 to the motor case 4, so that the sound vibration performance of the motor 1 is likely to be deteriorated. In contrast, in the present embodiment, a floating structure is employed in which the stator 2 is supported in a floating state with respect to the motor case 4. Specifically, the stator 2 is separated from the inner periphery of the motor case 4 in the radial direction, and the stator 2 is fixed to the site of the motor case 4 away from the stator 2 in the axial direction. Thus, it is possible to reduce the noise from the motor 1, which makes the driver to feel uncomfortable. Consequently, it is possible to provide a comfortable cabin space.

Also, if the stator 2 is supported directly on the motor case 4, vibration occurring in the stator 2 is transmitted directly to the motor case 4. Thus, the motor case 4 becomes a vibration source, and large noise occurs. For example, if the stator 2 is fixed directly, i.e., without via the inner frame 3, to the motor case 4 with bolts 5, the vibration energy applied to the stator 2 is through the integrated fixation site by bolts 5 (i.e., without being reduced) transmitted to the motor case 4. In this case, since the stator 2 is structured to be supported on the motor case 4 at three points by three bolts 5, the structure is more advantageous than the case of the stator 2 being shrink fitted on the inner periphery of the motor case 4 (36th order of the motor noise due to the circular 0th-order mode is improved to some extent). However, the influence of vibration caused by the circular 0th-order mode would remain. Further, motor noise 12th deteriorates due to a circular 3rd-order mode of vibration in which vibrations occur with the supporting portions by bolt exhibiting antinodes. In contrast, in the present embodiment, by fixing the stator 2 through the inner frame 3 to the motor case 4, part of the vibration energy applied to the stator 2 is consumed for elastically deforming the inner frame 3. Therefore, the vibration energy transferred to the motor case 4 can be reduced through the inner frame 3. Thus, such a situation may be suppressed in which the motor case 4 is vibrated so that the motor case 4 itself becomes a vibration and noise source. This makes it possible to reduce the noise from the motor 1, which would cause the driver to feel discomfort. Therefore, it is possible to provide a comfortable cabin space.

More specifically, in a state of supporting the stator 2 to the motor case 4 via the inner frame 3, a gap in the radial direction or a radial gap (clearance) CL1 is provided between the radially outer peripheral surface 23 of the stator 2 (stator core 2a) and the radially inner peripheral surface 43 of the motor case 4 (cylindrical portion 4a). Similarly, a radial gap CL2 is provided. That is, the inner frame 3 is configured to be fixed or secured to the bottom portion 4b of the motor case 4, which is away with respect to the stator 2 in the axial direction (x-axis direction), rather than fixed to the radially inward, inner peripheral surface 43 of the bottomed cylindrical motor case 4 (cylindrical portion 4a). Therefore, it is possible to avoid a situation in which the vibration of the stator 2 in the radial direction is transmitted to the motor case 4 via a contact surface in the radial direction. Furthermore, between the stator 2 and the inner frame 3 (connecting portions 33), and between the motor case 4 and the inner frame 3 (connecting portions 33), gaps or clearances CL3, CL4 are respectively provided. Therefore, the vibration from the stator 2 is transmitted to the motor case 4 exclusively via the connecting portion 33 between the bolt fastening portions 30, 32 of the inner frame 3. Therefore, the vibration of the motor 1 is transmitted to the outside through a relatively long vibration transmission path with the vibration being attenuated. Therefore, the vibration transmitted from the stator 2 to the motor case 4 is reduced, and since the vibrations and noise of motor 1 to be emitted to the exterior is reduced, it is possible to improve sound vibration performance of the motor 1. Note that the gap CL1 (the gap CL2) is sufficient if dimensioned to provide a clearance that prevents the inner peripheral surface 43 of the motor case 4 from being surface contacted to the outer peripheral surface 23 of the stator 2 (outer peripheral surface 34 of the inner frame 3). Thus, the gap is not necessarily required to form an air void, but a buffer material or the like may be interposed to fill the gap CL1 (CL2).

Note that the stator 2 might be configured to be double-supported on the motor case 4 (i.e., the stator 2 is supported at both axial ends of the motor case 4). However, in this case, vibration in the radial direction of the stator 2 will be transmitted to the motor case 4 via the support portions in the axial direction on both sides of the stator 2. Therefore, the vibration transmitted from the stator 2 to the motor case 4 cannot be sufficiently reduced, so that the sound vibration performance of the motor 1 is likely to be deteriorated. In contrast, in the present embodiment, a cantilever supporting structure for the stator 2 with respect to the motor case 4 is provided. Therefore, the vibration transmission path to the motor case 4 is limited only through the one axial end from the stator 2, whereby it is possible to reduce the vibration transmitted from the stator 2 to the motor case 4 to thereby improve the sound vibration performance of the motor 1.

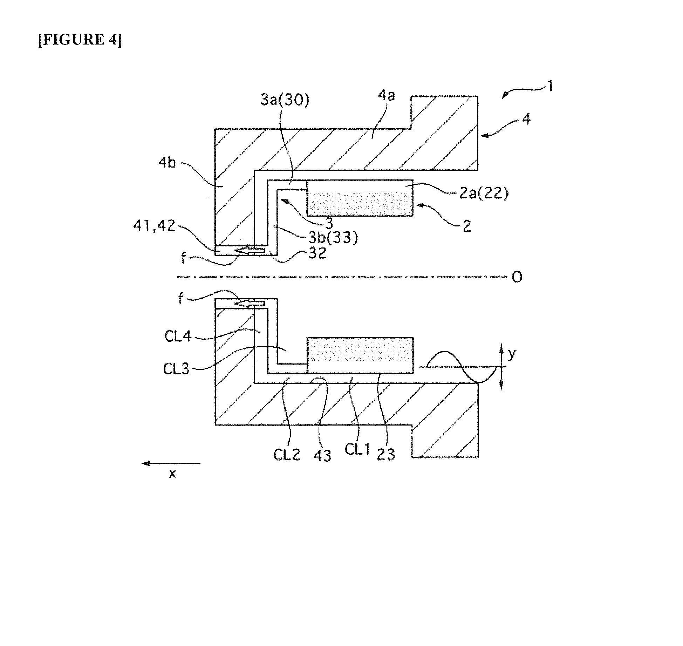

Figure 4 shows a schematic cross sectional view of the motor 1 taken along a plane passing through the axis O thereof. Due to the electromagnetic exciting force, the stator 2 is vibration displaced in the radial direction in the circular 0th-order harmonic mode. A radial displacement amount at this time is defined by "y". When the radial rigidity of the portion (connecting portion 33) between the bolt fastening portions 30, 32 of the plate portion 3b of the inner frame 3 is defined by "k", while the radial force transmitted from the inner frame 3 to the motor case 4 is defined by "f", the expression, f = k × y, is established, In other words, the plate portion 3b (connecting portion 33) of the inner frame 3 functions as an elastic member (spring) for absorbing the radial displacement (vibration), and the radial rigidity or stiffness k may be regarded as a spring constant. In the present embodiment, by adjusting a value of spring constant (rigidity) k to thereby reduce the force f, the vibration or noise of the motor 1 will be reduced to be emitted to the exterior. More specifically, the radial rigidity k of the connecting portion 33 is configured to be lower than the radial rigidity of the bottom portion 4b of the motor case 4. Thus, as compared to a case in which the rigidity k is set to equal to or higher than the rigidity of the bottom portion 4b of the motor case 4, the force f may be reduced, and the function of the inner frame 3 as a vibration absorbing member may be fulfilled sufficiently to reduce the vibration transmitted from the stator 2 to the motor case 4. Thus, the connecting portion 33 of the inner frame 3 represents a radial vibration suppressing portion for reducing vibration transmission force in the radial direction of the inner frame 3 (vibration transmitted to the motor case 4 through the inner frame 3 in the radial direction).

Incidentally, in a conceivable construction, the inner frame 3 is disposed to the outer peripheral surface 23 of the stator 2 in addition to the axial end of the stator 2 (the stator core 2a). For example, with the inner frame 3 being formed by a bottomed cylindrical shape, it is conceivable to arrange the cylindrical portion thereof radially outward of the stator core 2a. However, in this case, there is a possibility of higher radial stiffness of the inner frame 3 (plate portion 3b). In contrast, in this embodiment, the inner frame 3 is not placed in the radially outward position of the stator core 2a, so that the radial rigidity of the inner frame 3 (plate portion 3b) may be reduced more reliably. Further, while ensuring the radial dimension of the stator 2, it is possible to suppress the enlargement of the overall radial dimension of the motor 1.

The plate portion 3b (connecting portion 33) is provided with a plurality of holes 330, as lightening portions. By providing the lightening portions, it is possible to facilitate that the rigidity k is set lower than the bottom portion 4b of the motor case 4. In addition, since the main direction of the vibration transmitting path through the inner frame 3 (connecting portion 33) by the electromagnetic exciting force of the stator 2 is in the radial direction, if the radial rigidity of the inner frame 3 is high, the inner frame 3 transmits the radial magnetic excitation force of the stator 2 without subject to sufficient reduction. Therefore, it is not possible to sufficiently suppress noise. In contrast, in this embodiment, by providing lightening portions (holes 330) in the connecting portion 33 of the inner frame 3, as compared to the case without the lightening portions (holes 330) being provided, the radial rigidity k of the inner frame 3 at the connecting portion 33 thereof is reduced. Thus, by reducing the radial rigidity k of the inner frame 3 (connecting portion 33), it is possible to more effectively reduce the radial vibration energy (force f) transmitted from the stator 2 in the radial direction to the motor case 4 via the inner frame 3.

Further, in this embodiment, by providing the lightening portions (holes 330), the radial rigidity k at the plate portion 3b (connecting portion 33) is set lower than the rigidity in the circumferential direction. By reducing the rigidity of the inner frame 3 in the redial direction which represents the main input direction of the electromagnetic excitation force of the stator 2 to the inner frame 3 than in the other direction (i.e. in the circumferential direction, for example), it is possible to reduce the vibration energy (force f) more effectively. When providing the lightening portions (holes 330), however, it is obviously preferable to maintain the overall strength of the inner frame 3 (supporting strength of the stator 2 by the inner frame 3). Note that the lightening portions may be structured in arbitrary size of recesses of pertinent shape. In the present embodiment, by providing the through holes 330 as lightening portions, it is possible to reduce the radial rigidity k more effectively while increasing the lightening amount to thereby obtain the lightweight inner frame 3 (connection portion 33). Thus, it is possible to reduce the overall weight of the motor 1.

Incidentally, instead of coupling the donut-like, disk-shaped inner frame 3 to the motor case 4 radially inward of the stator as in the present embodiment, the coupling may be made to the motor case 4 at a position radially outward of the stator 2. However, in this case, due to the radial electromagnetic excitation force of the stator 2, a unique resonant mode of the motor casing 4 itself is excited. Thus, there is a possibility that the vibration amplified in the vibration transfer characteristic is inputted to the motor case 4. In other words, subjected to vibration amplification by resonance mode of the motor case 4, the vibration and noise of the motor 1 is likely to be deteriorated. Also, there is a possibility that the radial dimension of the motor case 4 is increased. By shortening the radial dimension of the connecting portion 33 of the inner frame 3 (the vibration transmission path length from the stator 2 to the motor case 4) in order to avoid this size increases, the effect of reducing vibration transmitted from the stator 2 to the motor case 4 will be insufficient, so that the vibration or noise of the motor 1 is likely to be deteriorated.

In contrast, in the present embodiment, the inner frame 3 is coupled to the motor case 4 at a position radially inner side of the stator 2. Therefore, the size of the motor 1 is suppressed, and the sound and vibration performance of the motor 1, etc. may be improved while avoiding the above stated inconveniences. For example, it is possible to suppress the amplitude of the vibration due to excitation of the resonance mode of the motor case 4 due to the electromagnetic exciting force of the stator 2. It is also possible to reduce the magnitude of electromagnetic exciting force itself transferred from the stator 2 to the motor case 4. That is, since the main direction of vibration which comes through the inner frame 3 by the electromagnetic exciting force of the stator 2 is the radial direction, the vector of the force f to be inputted from the inner frame 3 to the bottom portion 4b of motor case 4 (bolt fastening portion 42) is symmetrical (in opposite directions) with respect to the axis O. Here, at the bottom portion 4b of the motor case 4, since the bolt fastening portion 42 is positioned in a radially inner side than the outer diameter of the motor case 4 (bottom portion 4b), the radius of the bolt fastening portion 42 is relatively small (i.e., relative to radially outer portions at the bottom portion 4b). Thus, in the bolt fastening portion 42, it is possible to reduce the symmetric forces f (in the opposite direction) by canceling each other. Also, the rigidity of the bolt fastening portion 42 representing the coupling portion of the inner frame 3 (bolt fastening portion 32) is relatively large (i.e., relative to the radially outward portion in the bottom portion 4b). Thus, in the bolt fastening portion 42, it is easy to reduce the above described symmetrical forces (in the opposite direction from each other) by canceling each other. In other words, in the present embodiment, the vibration in the radial direction is transmitted concentrated to the part that is of small radius and of high rigidity, so that the vibrations of the opposite directions are intended to be offset each other in this part.

Here, the bolt fastening portion 42 is provided integrally with the bearing portion 41 which is provided for rotatably supporting the rotor. In other words, the inner frame 3 (bolt fastening portion 32) is coupled via the bolt fastening portion 42 to the bearing portion 41 provided with a thick wall for rotatably supporting the rotor. Thus, by connecting (coupling) the inner frame 3 (bolt fastening portion 32) to the portion of originally high rigidity in the motor case 4 (i.e. bearing portion 41, bolt fastening portion 42), it is possible to effectively obtain the vibration cancelling effects while simplifying the structure of the motor 1. Note that, by providing the bolt fastening portion 32 (bolt fastening portion 42) radially inwardly of the stator core 2a, it is easy to fasten the inner frame 3 and the motor case 4 by the bolt 6 from the x-axis negative direction as well.

When forming the inner frame 3 from the electrically conductive metal material as in the present embodiment, an eddy current is likely to be generated in a surface portion of the inner frame 3 to be axially opposed to the coil 2b wound about the stator 2. When the eddy current is generated, the inner frame 3 generates heat. Therefore, it is necessary to suppress the inner frame 3 from making excessively much heat. In addition, the energy loss of the motor 1 also occurs by that heating. With a larger axial distance (clearance CL3) between the inner frame 3 and the coil 2b, it is possible to suppress the eddy current. However, with too large an axial distance (gap CL3), the overall axial dimension of the motor 1 is increased. Thus, the motor is likely to be large-sized. In contrast, in the present embodiment, in between the bolt fastening portions 30, 32 of the plate portion 3b of the inner frame 3 (connecting portions 33), a plurality of holes 330 are provided in the vicinity of coils 2b wound around the stator 2 (in the axial end), and specifically at a portion that overlaps with the coil 2b in the axial direction. That is, although the holes 330 can be provided in any part in the radial direction of the connection portion 33 to reduce the radial rigidity of the inner frame 3 (connecting portions 33), when provided at an overlapped portion with the coil 2b in the axial direction, by providing the hole 330 in an overlapping portion with the coil 2b, the occurrence of eddy currents in the inner frame 3 may be suppressed additionally. By thus suppressing the generation of eddy currents, it is possible to prevent the inner frame 3 from being subject to excessively high temperature, and it is possible to reduce energy loss. Also, because the inner frame may be positioned close to the coil 2b (stator 2) in the axial direction, the stator may be compactly supported to thereby avoid increase in size of the motor 1 (in the axial direction). Note that the shape and size of the holes 330 are arbitrary. Since the hole 330 is circular in this embodiment, it is easy to mold.

### [Effects]

The following lists the effects achieved by a motor 1 or a stator support structure in the first embodiment.
(1) Provided are an annular stator 2;
   a motor case 4 for accommodating the stator 2; and
   an annular inner frame 3 (support member) configured to support one axial end of the stator 2 on the motor case 4, wherein the inner frame includes:
   a bolt fastening portion 30 (first coupling portion) providing a coupling portion with the stator on a radially outer side, and
   a bolt fastening portion 32 (second coupling portion) providing a coupling portion with the motor case 4 on a radially inner side, wherein, at a portion between the bolt fastening portions 30, 32 (connecting portion 33), the radial rigidity k is lower than the circumferential rigidity thereof.

   Thus, by reducing the rigidity k of the inner frame 3 in a radial direction representing the main input direction of the electromagnetic excitation force of the stator 2 to the inner frame 3 than in the other direction (circumferential direction), it is possible to reduce the vibration energy (force f) to thereby suppress noise.
(2) By providing a plurality of lightening portions (holes 330) arranged in the circumferential direction at a portion between the bolt fastening portions, as compared to a case in which the lightening portions are not provided, the radial rigidity of the inner frame 3 is low between the bolt fastening portions 30, 32 (connecting portion). Thus, by reducing the rigidity k of the inner frame 3 in a radial direction representing the main input direction of the electromagnetic excitation force of the stator 2 to the inner frame 3, it is possible to reduce the vibration energy (force f) to thereby suppress noise.
(3) The plurality of lightening portions include holes 330 which penetrate the inner frame 3 (connecting portion).
   Thus, in addition to reducing the radial rigidity k more effectively, it is possible to reduce the weight of the motor 1.
(4) A coil 2b is wound around the stator 2, and a hole 330 is provided between the bolt fastening portions 30, 32 (connecting portion) in the inner frame 3, in a portion which overlaps with the coil 2b in the axial direction.
   Thus, an eddy current will be prevented from being generated in the inner frame 3 (connecting portion 33) to thereby reducing energy loss while suppressing the motor 1 from being large-sized (in the axial direction).
(5) The motor case 4 includes a bearing portion 41 for rotatably supporting the rotor, and the bolt fastening portion 32 (second coupling portion) is coupled to the bearing portion 41 of the motor case 4.
   Therefore, it is possible to suppress vibration from being amplified due to the resonance mode of the motor case 4 being excited, while simplifying the structure of the motor 1. Further, the vibration transmitted to the motor case 4 may be cancelled to reduce the same.

### [SECOND EMBODIMENT]

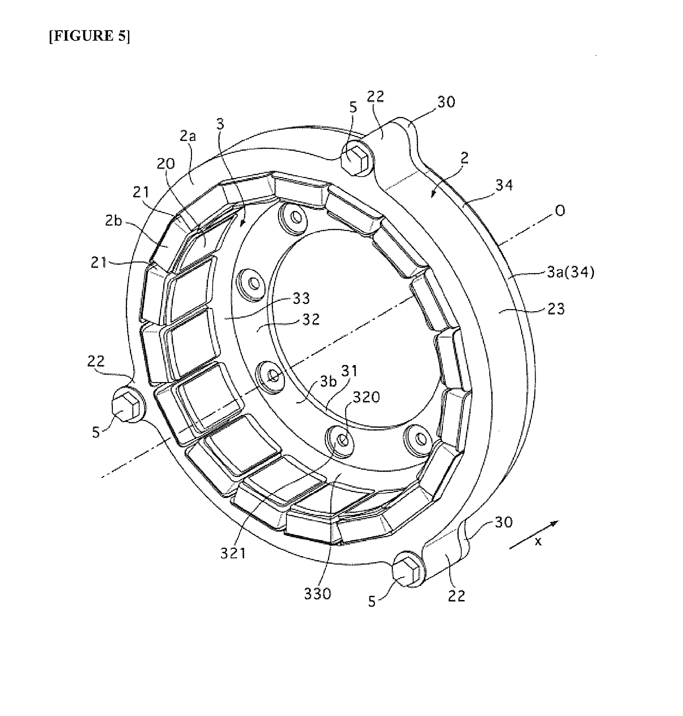

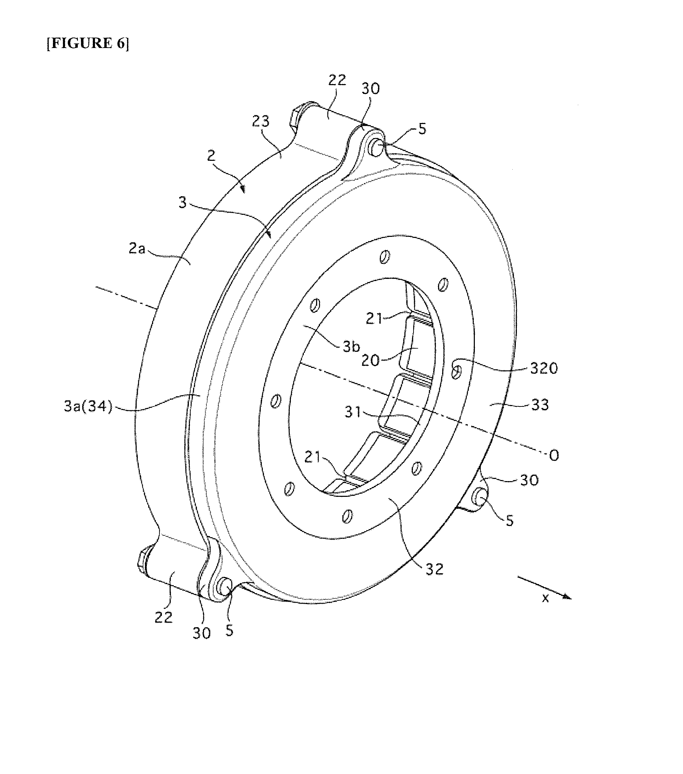

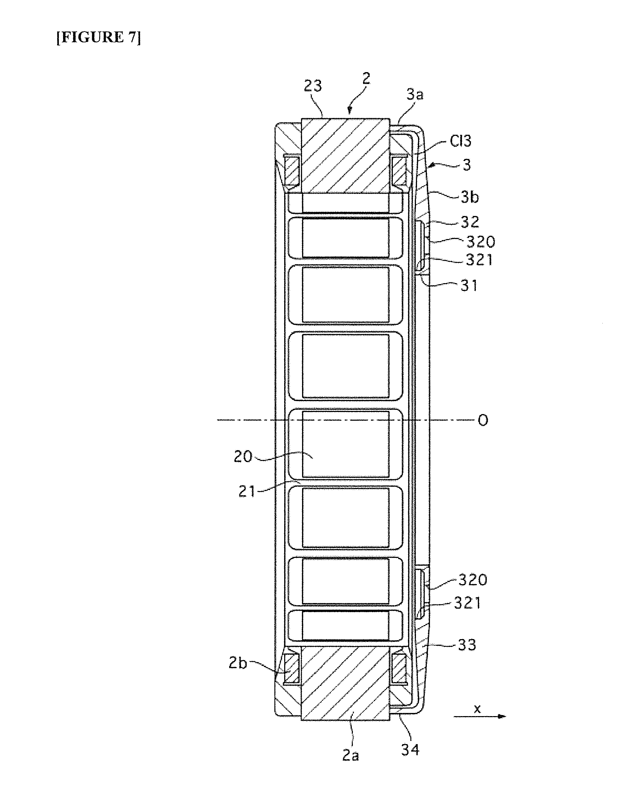

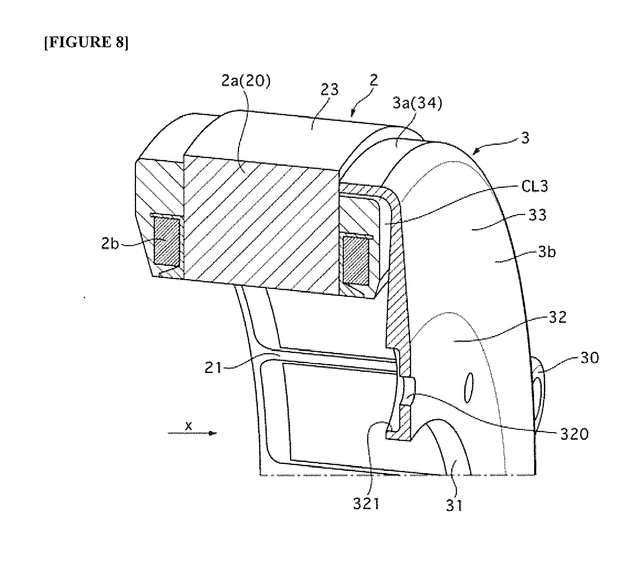

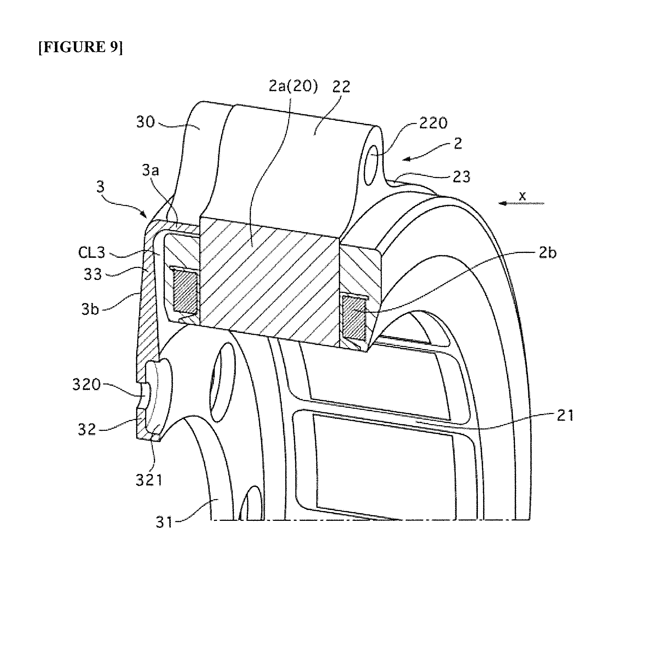

In a motor 1 of the present embodiment, instead of providing the lightening portions in the connecting portion 33, by allowing a plate thickness of the connecting portion 33 to vary in the radial direction so that the radial rigidity of the inner frame 3 (connecting portion 33) is reduced. First, a description is given of the configuration. Figure 5 is a perspective view of an assembly of the stator 2 and the inner frame 3 of the present embodiment seen from the x-axis negative direction. Figure 6 is a perspective view of the assembly seen from the x-axis positive direction. Figure 7 is a sectional view of the assembly taken along a plane passing through the axis O. Figure 8 is a partial sectional view of the assembly taken along that plane and shows a perspective view thereof seen from the x-axis positive direction. Finally, Figure 9 is a partial sectional view of the assembly taken along that plane and shows a perspective view thereof seen from the x-axis negative direction.

As shown in Figures 5 and 6, the connecting portion 33 is not provided with lightening or hollow portions. As shown in Figures 7 to 9, in the plate portion 3b of the inner frame 3, the thickness (x-axis dimension) of the connecting portion 33 between the bolt fastening portions 30,32 is configured to vary in the radial direction. Specifically, the plate thickness of the connecting portion 33 gradually changes in the radial direction, and is set to gradually thinner from the radially inner side (on the side of axis O) toward the radially outer side (at a substantial constant rate). The innermost thickness in the radial direction of the connecting portion 33 is roughly of the same plate thickness of the bolt fastening portion 32, while the outermost thickness in the radial direction is substantially of the same thickness as that of the cylindrical portion 3a. Since the other configurations are the same as in the first embodiment, the description thereof is omitted with the same reference numerals attached.

Now, a description is given of the operational effects. By allowing the plate thickness of the connecting portion 33 to vary in the radial direction, as compared to a case in which the plate thickness of the connecting portion 33 is unchanged and substantially uniform, the radial rigidity of the inner frame 3 (connecting portion 33) is reduced. Specifically, the rigidity or stiffness k in the radial direction in the connecting portion 33 is set lower than the radial rigidity or stiffness in the bottom portion 4b of the motor case 4. Thus, as in the first embodiment, the vibration transmitted to the motor case 4 may be reduced in the inner frame 3 (connecting portion 33) to thereby effectively suppress noise. Note that, similar to the first embodiment, the radial rigidity k in the connecting portion 33 may be lowered than the circumferential rigidity in the connecting portion 33.

Also, when allowing the thickness to vary, the overall strength of the inner frame (supporting strength of the stator by the inner frame 3) is intended to be maintained. Specifically, since the torque created from the stator 2 by the electromagnetic exciting force is introduced in the inner frame 3 (force in the circumferential direction), a sufficient strength is required for the plate portion 3b (connecting portion 33). Here, since the radially inner side portion of the plate portion 3b (connecting portion 33) is disposed in the vicinity of the coupling to the motor case 4 with a smaller radius than the radically outer side portion, with weak rigidity, the inner frame 3 has difficulty in receiving the input torque. Thus, in the present embodiment, while securing the minimum plate thickness of the radially inner side of the plate portion 3b (connecting portion 33), the thickness is set to be reduced gradually toward the radially outward side from this portion. Thus, while ensuring the strength that is required at the minimum in the plate portion 3b (connecting portion 33), it is possible to reduce the radial rigidity in the radial direction compared with the one with the same thickness, i.e., without being subject to vary in the radial direction as the radially inner side portion. Note that the innermost thickness in the radial direction of the connection portion 33 may be any size that can ensure a sufficient strength to generate a reaction force against the torque from the stator 2, and the thickness thereof may be smaller than that of the bolt fastening portion 32.

In addition, there is a possibility that an eddy current is generated in the inner frame 3 (connecting portions 33) on the surface portion thereof facing the coil 2b of the stator 2in the axial direction, The eddy current becomes smaller as an axial distance (clearances Cl3) between the connecting portion 33 and the coil 2b increases (i.e., as the magnetic field intensity reached decreases). Further, the portion that faces the coil 2b in the axial direction corresponds to a portion in the radially outer side of the connecting portion 33. Thus, when reducing the thickness of this portion as described above, depending on the amount of thickness reduction, the axial distance (clearance Cl3) between this portion of the connecting portion 33 and the coil 2b may be made greater so that occurrence of eddy current may be suppressed.

In order to reduce the radial rigidity or stiffness of the connecting portion 33, from the radially outer side of the connecting portion 33 toward the radially inner side, the thickness may be varied to decrease gradually. Moreover, in the connecting portion 33 on the way from the radially inner side to the radially outer side, a portion of small thickness may be provided. The other operational effects are as those of the first embodiment.

Now, the following lists the effect achieved by a motor 1 or a stator support structure in the second embodiment.
(1) By allowing the plate thickness of the inner frame 3 (connecting portion 33) between the bolt fastening portions 30, 32 to vary in the radial direction, compared to a case of the plate thickness without being varied, the radial rigidity of the inner frame 3 between the bolt fastening portions 30, 32 (connecting portion 33) is low.
   Thus, by reducing the rigidity k of the inner frame 3 in a radial direction representing the main input direction of the electromagnetic excitation force of the stator 2 to the inner frame 3, it is possible to reduce the vibration energy (force f) to thereby suppress noise.

(2) The plate thickness of the inner frame 3 between the bolt fastening portions 30, 32 (connecting portion 33) is configured to be gradually thinner in a direction from the radially inner side toward the radially outer side.
   Thus, it is possible to facilitate to ensure the strength of the inner frame 3 while reducing the rigidity k of the inner frame 3 in the radial direction.

### [THIRD EMBODIMENT]

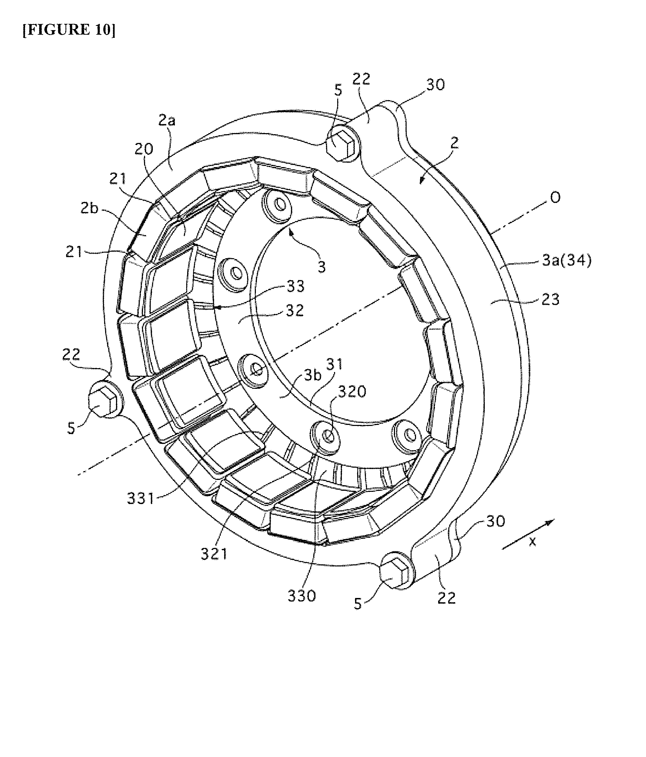

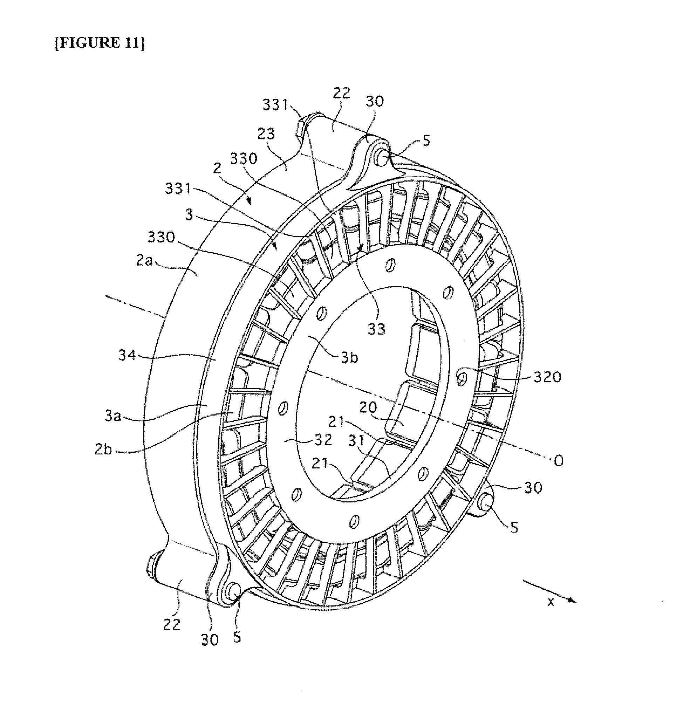

In a motor 1 of the present embodiment, a rib 331 is formed which extends radially between the holes 33 adjacent to each other in the circumferential direction. First, a description is made of the configuration. Figure 10 is a perspective view of an assembly of the stator 2 and the inner frame 3 of a third embodiment seen from the x-axis negative direction, while Figure 11 is a perspective view of the assembly seen from the x-axis positive direction.

As shown in Figures 10, 11, a plurality of holes circumferentially arranged side by side in the connecting portion 33 and penetrating the connecting portion 33 constitutes a lightening portion. Between the holes 330 adjacent to each other in the circumferential direction, a rib 331 is formed which extends in the radial direction of the inner frame 3 (plate portion 3b). The rib 331 is a thin plate-shaped bar (spoke) that connects the radially inner side (the bolt fastening portion 32) of the inner frame 3and the radially outer side (cylindrical portion 3a). A plurality of such ribs 331 is arranged to extend radially. The connecting portion 33 is formed by these ribs 331.

The thickness of the rib 331 (size in the direction about the axis O) is approximately equal to the thickness of the cylindrical portion 3a (size in the radial direction). The size in the X-axis direction is substantially the same as the plate thickness of the bolt fastening portion 32 at the radially innermost side, and as from there toward the radially outward, the size is gradually increased, after gradually increasing to end with a substantially constant width (or slightly smaller toward the radially outer side). Further, at the portion at which the rib 331 is coupled to the inner periphery surface on the radially inner side of the cylindrical portion 3a (i.e. on the radially outer side), the size of the rib 331 in the X-axis direction is set to be substantially equal to the size of the cylindrical portion 3a in the X-axis direction. The rib 331, as a whole, is formed in generally L-shaped and recessed on the x-axis negative direction. By positioning the inner frame 3 relative to the stator such that the coil 2b of the stator 2 is fitted into the recessed portion, increase in the x-axis direction size of the assembly may be suppressed as well. Since the other configurations are the same as in the first embodiment, the description thereof is omitted with the same reference numerals attached.

Now, a description is given of the operational effects. By forming the ribs 331 on the connecting part 33 (to thereby form holes 330 as lightening portion), the radial rigidity of the inner frame 3 (connecting portion 33) is reduced. More specifically, the radial rigidity k of the connecting portion 33 is configured to be lower than the radial rigidity of the bottom portion 4b of the motor case 4. Thus, as in the first embodiment, the vibration transmitted to the motor case 4 may be reduced in the inner frame 3 (connecting portion 33) to thereby effectively suppress noise. Further, as a structure for connecting the bolt fastening portion 32 and the cylindrical portion 3a at the connecting portion 33, only ribs 331 are provided. Therefore, the proportion of holes 330 (lightening weight) is increased in the connecting portion 33 as much as possible, so that the inner frame 3 (connecting portions 33) is made lightweight, which can lead to reduction of the weight of the entire motor 1. Even when only ribs 331 are provided, it is obviously preferable to maintain the overall strength of the inner frame 3 (supporting strength of the stator 2 by the inner frame 3). By providing the hole 330 in a portion which overlaps with the coil 2b in the axial direction, generation of eddy currents in the inner frame 3 (connecting portion33) may be suppressed, as in the first embodiment. The other operational effects are the same as in the first embodiment.

Now, the following is identified as the effect achieved by a motor 1 or a stator support structure in the third embodiment.
(1) A rib 331 extending in the radial direction of the inner frame 3 (support member) is formed between holes 330 adjacent to each other in the circumferential direction.
   Thus, the inner frame 3 is made lightweight, which makes it possible to reduce the weight of the motor 1.

### [FOURTH EMBODIMENT]

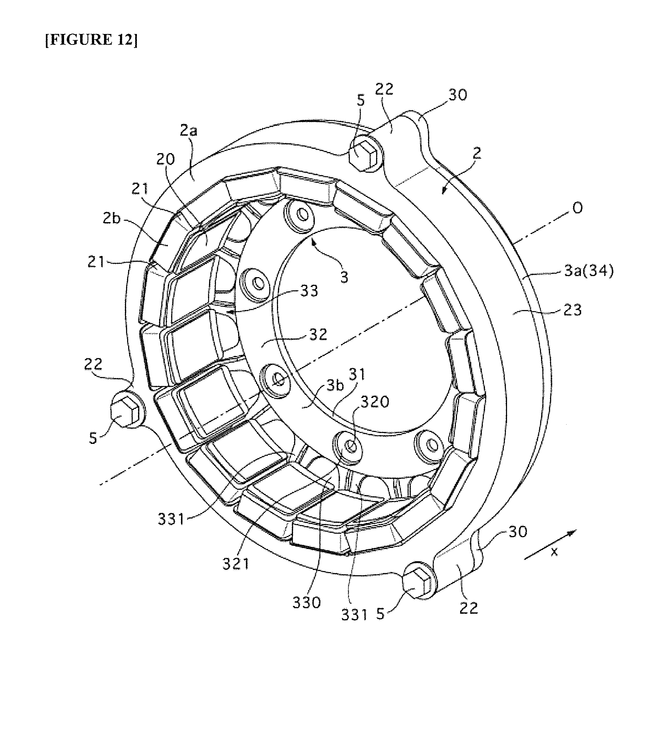

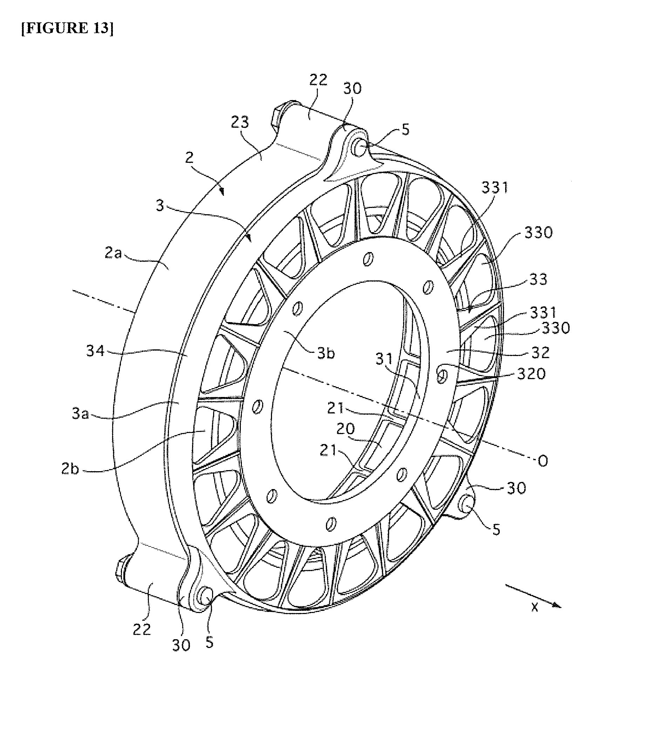

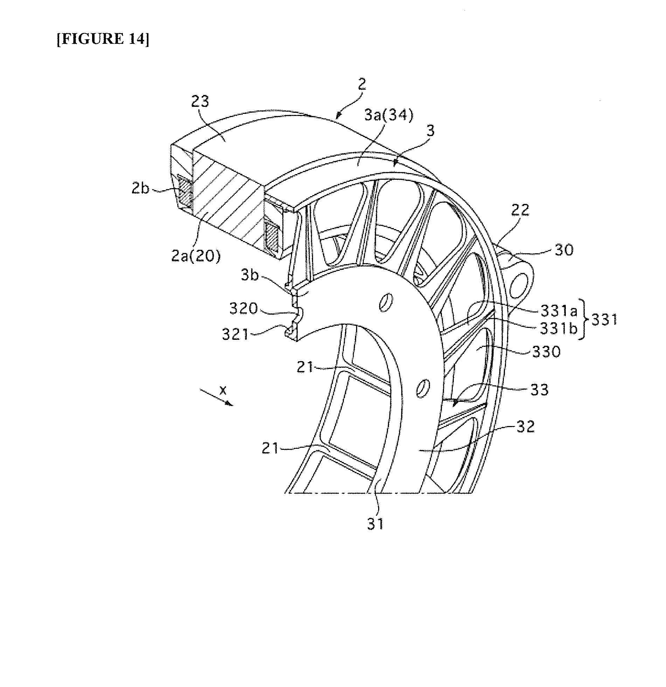

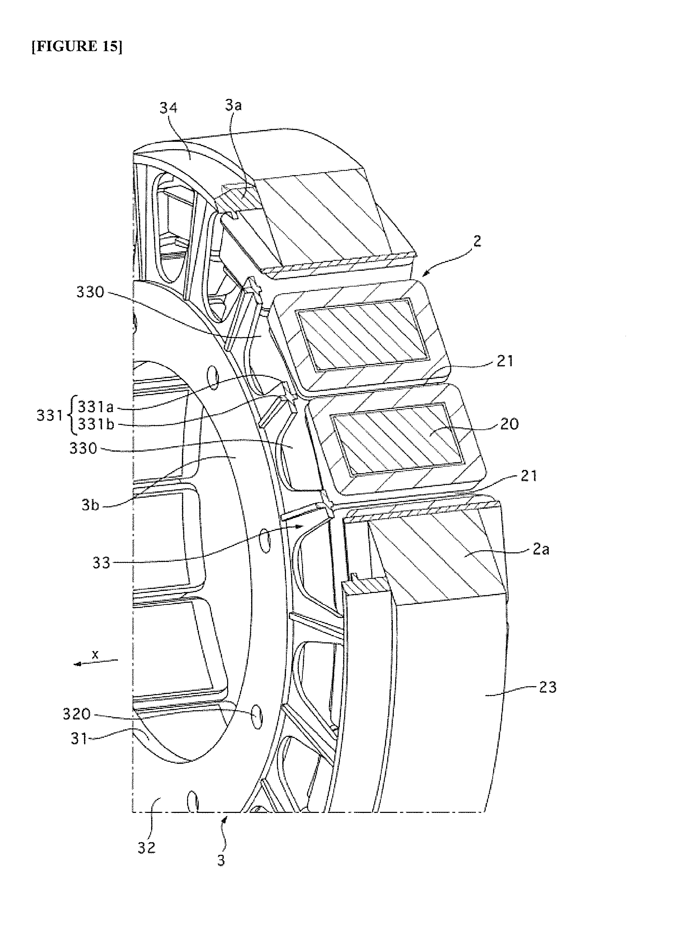

In a motor 1 of the present embodiment, in addition to forming ribs 331 at the connecting portion 33, a cross-section of the rib 331 is formed cross-shaped. First, a description is made of the configuration. Figure 12 is a perspective view of an assembly of the stator 2 and the inner frame 3 seen from the x-axis negative direction. Figure 13 is a perspective view of the assembly seen from the x-axis positive direction. Figure 14 is a partial sectional view of the assembly taken along a plane passing through the axis O and shows a perspective view thereof seen from the x-axis positive direction. Finally, Figure 15 is a partial sectional view of the assembly taken along a plane parallel with the axis O and shows a perspective view thereof seen from the x-axis positive direction.

As shown in Figures 12 and 13, a plurality of holes 330 arranged in the connecting portion 33 and penetrating or passing through the connecting portion 33 in the plate portion 3b of the inner frame 3 represents a lightening portion. Between the holes 330 adjacent to each other in the circumferential direction, a rib 331 is formed which extends in the radial direction of the inner frame 3 (plate portion 3b). The rib 331 is a thin plate-shaped bar (spoke) that connects the radially inner side (the bolt fastening portion 32) of the inner frame 3and the radially outer side (cylindrical portion 3a). A plurality of such ribs 331 is arranged to extend radially. As shown in Figures 14, 15, the rib 331 is made in a cross-shaped in a cross section taken along a plane perpendicular to a direction in which the rib 331 extends (i.e. radial direction). The cross-section of the rib 331 has a portion 331a extending in the circumferential direction of the inner frame 3 (circumferential direction of the axis O), and a portion 331b extending in the axial direction (x-axis direction).

The portion 331a corresponds to a part of a plate member of a substantially uniform thickness (x-axis dimension) with the hole 330 removed. The x-axis size (thickness of the plate) is set substantially equal to the plate thickness of the cylindrical portion 3a (size in the radial direction). The hole 330, when viewed in the x-axis direction, is sized small in the circumferential size (in the circumferential direction about the axis O) at the radially inner side and is sized large in the circumferential direction at the radially outer side so as to form an approximate isosceles triangle. Thus, the shape of the portion 331a between adjacent holes 330, is formed in the approximate isosceles triangle in which the circumferential dimension of the radially inner side is large and the circumferential dimension of the radially outer side is decreased. The shape of the portion 331b is the same as the rib 331 of the third embodiment. The portion 331b is located in a substantially central position in the circumferential direction of the portion 331a and is provided so as to protrude in both directions along the x-axis direction of the portion 331 a. Since the other configurations are the same as in the first embodiment, the description thereof is omitted with the same reference numerals attached.

Now, a description is given of the operational effects. By forming the ribs 331 on the connecting part 33 (to thereby form holes 330 as lightening portion), the radial rigidity of the inner frame 3 (connecting portion 33) is reduced. More specifically, the radial rigidity k of the connecting portion 33 is configured to be lower than the radial rigidity of the bottom portion 4b of the motor case 4. Thus, as in the first embodiment, the vibration transmitted to the motor case 4 may be reduced in the inner frame 3 (connecting portion 33) to thereby effectively suppress noise. Note that, similar to the first embodiment, the radial rigidity k in the connecting portion 33 may be lowered than the circumferential rigidity in the connecting portion 33.

Furthermore, when forming such a rib 331, the overall strength of the inner frame (supporting strength of the stator by the inner frame 3) is intended to be maintained. Specifically, the rib 331 is formed in cross-shaped and provided with the rib portions 331a and 331b projecting in the circumferential direction and the axial direction, respectively. Therefore, it is possible to improve the fixing strength of the stator 2 to the motor case 4 by the inner frame 3. That is, the circumferentially projecting portions 331a maintains the rigidity in the circumferential direction of the inner frame 3 (connecting portion 33) to ensure a sufficient stiffness for generating a reaction force against the torque by the electromagnetic exciting force from the stator 2 (circumferential direction force). In particular, since the size of the portion 331a in the circumferential direction is set larger on the radially inner side (i.e., near the coupling portion to the motor case 4 and the radius of the connecting portion 33 is smaller than on the radially outer side) than on the radially outer side, is easy to ensure the minimum required strength in the plate portion 3b (connecting portion 33). Further, due to the portion 331b projecting in the x-axis direction, it is possible to maintain the rigidity of the inner frame 3 (connecting portion 33) in the axial direction to suppress the stator 2 from being tilted in the axial direction (tilting of the axis of the stator 2 with respect to the axis O).

Note that the cross-section of the rib 331 is not limited to a cross shape, but may be, for example, T-shaped or Y-shaped. The portions 331a, 331b constituting the cross-section of the rib 331 are not necessarily required to project in the circumferential and axial direction to obtain the above effects. In the present embodiment, the cross-section of the rib 331 is made cross-shaped, the portions 331a and 331b project respectively in the circumferential direction and the axial direction. Therefore, it is possible to effectively ensure the rigidity of the connecting portion 33 in these directions. By providing a hole 330 in a portion overlapping with the coil 2b in the axial direction, as in the first embodiment, generation of eddy currents may be suppressed in the inner frame 3 (connecting portion 33). The other operational effects are the same as in the third embodiment.

Now, the following is identified as the effect achieved by a motor 1 or a stator support structure in the fourth embodiment.
(1) The rib 331 is made cross-shaped in a cross section taken along a plane perpendicular to the direction in which the rib 331 extends.
   Therefore, it is possible to ensure the rigidity in the circumferential and axial directions of the inner frame 3 (connecting portions 33) and to improve the fixing strength of the stator 2 to the motor case 4.
(2) The cross-section of the rib 331 has a portion 331a extending in the circumferential direction of the inner frame 3 (the supporting member), and a portion 331b extending in the axial direction.
   Therefore, it is possible to more effectively secure the rigidity in the circumferential and axial directions of the inner frame 3 (connecting portion 33).

### [OTHER EMBODIMENT]

Although the embodiments of the present invention has been described by way of embodiments based on the drawings, specific configurations of the present invention are not intended to be limited to the embodiments. Changes in design or the like without departing the gist of the present invention may also be included in the scope of the present invention. For example, each configuration of the first to fourth embodiments may be appropriately combined.

### DESCRIPTION OF REFERENCE NUMERALS

- 2: stator
- 2b: coil
- 3: inner frame (support member)
- 30: bolt fastening portion (first coupling portion)
- 32: bolt fastening portion (second coupling portion)
- 33: connecting portion
- 330: holes (lightening portion)
- 331: rib
- 4: motor case
- 41: bearing section

## Claims

1. A rotating electrical machine, comprising:
an annular stator;
a motor case for accommodating the stator; and
an annular support member configured to support one axial end of the stator on the motor case, wherein the support member includes:
a first coupling portion forming a coupling portion with the stator on a radially outer side; and
a second coupling portion forming a coupling portion with the motor case on the radially inner side, wherein at a portion between the first coupling portion and the second coupling portion, the radial rigidity is lower than the circumferential rigidity.

2. A rotating electrical machine, comprising:
an annular stator;
a motor case for accommodating the stator; and
an annular support member configured to support one axial end of the stator on the motor case, wherein the support member includes:
a first coupling portion forming a coupling portion with the stator on the radially outer side; and
a second coupling portion forming a coupling portion with the motor case on the radially inner side, wherein, by allowing a plate thickness of the support member to vary in the radial direction at a portion between the first coupling portion and the second coupling portion, compared to a case in which the plate thickness is not subject to vary, the radial rigidity of the support member is reduced between the first coupling portion and the second coupling portion.

3. A rotating electrical machine, comprising:
an annular stator;
a motor case for accommodating the stator; and
an annular support member configured to support one axial end of the stator on the motor case, wherein the support member includes:
a first coupling portion forming a coupling portion with the stator on the radially outer side; and
a second coupling portion forming a coupling portion with the motor case on the radially inner side, wherein, by providing a plurality of lightening portions arranged in the circumferential direction between the first and second coupling portions of the support member, compared to a case without the lightening portion, the radial rigidity of the support members between the first coupling portion and the second coupling portion is low.

4. The rotating electrical machine according to claim 3, wherein the plurality of lightning portions includes holes penetrating the support member.

5. The rotating electrical machine according to claim 4, wherein a rib is formed which extends in the radial direction of the support member between the holes adjacent to each other in the circumferential direction.

6. The rotating electrical machine according to claim 5, wherein the rib is made cross-shaped in a cross section taken in a plane perpendicular to a direction in which the rib extends.

7. The rotating electrical machine according to any one of claims 4 to 6, wherein a coil is wound around the stator and the hole is provided in a portion which overlaps with the coil in the axial direction between the first and second coupling portions of the support member.

8. The rotating electrical machine according to any one of claims 1 to 7, wherein the motor case has a bearing portion for rotatably supporting the rotor, and the second coupling portion is coupled to the bearing portion of the motor case.

9. A stator supporting structure for a rotating electrical machine having a support member for supporting an annular stator at one axial end thereof in a motor case, the stator supporting structure, wherein the support member includes:
a first coupling portion forming a coupling portion with the stator on the radially outer side; and
a second coupling portion forming a coupling portion with the motor case on the radially inner side, wherein, by allowing a plate thickness of the support member at a portion between the first coupling portion and the second coupling portion, compared to a case in which the plate thickness is not subject to vary, the radial rigidity of the support member between the first coupling portion and the second coupling portion.
